# EUROPÄISCHE PATENTSCHRIFT

(11) **EP 0 837 988 B1**
(45) Veröffentlichungstag und Bekanntmachung des Hinweises auf die Patenterteilung: **24.03.1999**
(21) Anmeldenummer: 96925722.9
(22) Anmeldetag: 11.07.1996
(51) Int. Cl.: F04B 43/04, F04B 53/10, F04B 49/06, F04B 13/00

(54) **DOSIERPUMPE**
DOSING PUMP
POMPE DE DOSAGE

(30) Priorität: 13.07.1995 DE 19525557
(43) Veröffentlichungstag der Anmeldung: 29.04.1998
(73) Patentinhaber: KNF FLODOS AG, 6210 Sursee (CH)
(72) Erfinder: BOLT, Erwin, CH-5200 Brugg (CH); DURRER, Traugott, CH-6014 Littau (CH)
(74) Vertreter: Schmitt, Hans, Dipl.-Ing.
(86) Internationale Anmeldenummer: EP9603040
(87) Internationale Veröffentlichungsnummer: WO9703290

(56) Entgegenhaltungen:
- EP-A- 0 321 339
- WO-A-94/07717
- CH-A- 58 481
- DE-A- 3 320 386
- DE-A- 4 118 652
- FR-A- 2 527 699
- FR-A- 2 588 319
- FR-E- 69 873
- GB-A- 566 936

## Beschreibung

Die Erfindung bezieht sich auf eine Membran-Dosierpumpe mit einem motorischen Rotationsantrieb für die Arbeitsmembrane und einem Pumpenkopf mit einem Einlaßventil und einem Auslaßventil.

Es sind bereits Dosierpumpen bekannt, die mit einem Hubmagnet-Antrieb arbeiten und dementsprechend sehr schnelle Arbeitshübe durchführn, so daß sich eine entsprechend hohe Dosiergeschwindigkeit ergibt. Das zu dosierende Gut wird dabei mit hoher Geschwindigkeit ausgespritzt. In vielen Anwendungsfällen ist es jedoch erwünscht, das Zufördern des Mediums langsam vorzunehmen. Wird nun eine Dosierpumpe verwendet, die in der Lage ist, bei sehr kleinen Drehzahlen kontinuierlich zuzufördern, so werden zwar solche impulsartigen Förderungen vermieden, es treten hierbei jedoch Dichtprobleme bei dem Einlaßventil und dem Außlaßventil auf, die sich bei langsam laufenden Dosierpumpen durch die geringen Druckdifferenzen ergeben.

Aufgabe der vorliegenden Erfindung ist es, eine mit einem motorischen Rotationsantrieb arbeitende Membran-Dosierpumpe zu schaffen, bei der während des Betriebes nur geringe Druckspitzen auftreten und die auch bei geringer Arbeitsgeschwindigkeit und kleinen Dosiermengen exakte Dosierungen ermöglicht. Außerdem soll die Konstruktion Dosierpumpen mit sehr geringem Bauvolumen ermöglichen.

Zur Lösung dieser Aufgabe wird erfindungsgemäße insbesondere vorgeschlagen, daß der motorische Rotationsantrieb mit einer Ansteuerelektronik elektrisch verbunden ist, daß diese und der Motor für einen Betrieb mit jeweils vorgebbarer Ausgangslage der angetriebenen Arbeitsmembrane zu Beginn und am Ende einer Dosierung ausgebildet sind, daß die Ein- und Auslaßventile mit elastischen Ventilscheiben ausgebildet sind, die in Schließstellung mit einer Flachseite auf dem einen Ventilsitz bildenden Öffnungsrand eines Zuströmkanales aufliegen, daß auf der dem Zuströmkanal abgewandten Seite der Ventilscheibe innerhalb der Projektionsverlängerung des Zuströmkanales ein in Ventil-Öffnungsstellung die Ventilscheibe abstützendes, stegartiges Widerlager vorgesehen ist und daß die Ventile jeweils komplette, auswechselbare Einheiten bilden und als Ventileinsätze mit einer das Widerlager und einen Abströmkanal aufweisenden Widerlagerplatte, einer Ventilaufnahmeplatte sowie der Ventilscheibe ausgebildet sind.
Aus der DE-A-41 18 652 ist zwar eine Membranpumpe bekannt, die Ein- und Auslaßventile mit elastischen Ventilscheiben aufweist, sie offenbart jedoch keine Ansteuerelektronik für einen Dosierbetrieb der Pumpe. Außerdem sind die Ventile nicht als auswechselbare Einheiten ausgebildet.
Aus der FR-A-2 588 319 ist eine Dosierpumpe bekannt, mit der innerhalb eines Gesamtarbeitshubes Teilmengen dosiert werden können.
Schließlich kennt man aus der FR-A-0 321 339 eine Dosierpumpe, die mit einer Steuerung zur Veränderung von Hub- und Drehzahl ausgerüstet ist.
Keine dieser Druckschriften zeigt die Merkmalskombination der vorliegenden erfindungsgemäßen Dosierpumpe, die dadurch hinsichtlich insbesondere der Vakuumeigenschaften und der Dosiergenauigkeit auch bei geringen Arbeitsgeschwindigkeiten besonders vorteilhaft arbeitet.
Durch den gesteuerten Antriebsmotor lassen sich geringe Arbeitsgeschwindigkeiten und in Verbindung mit der vorgebbaren Ausgangslage auch hohe Dosier-Wiederholgenauigkeiten realisieren, ohne daß während des Dosiervorganges hohe Druckspitzen und Pulsationen auftreten. Geringe Druckspitzen ergeben unter anderem Vorteile bei der Durchmischung und außerdem sind dadurch die Anforderungen an die Abdichtung der Pumpe geringer.
Die vorgesehene Konstruktion der Ventile ergibt zusammen mit den Laufeigenschaften der Pumpe ein praktisch überschneidungsfreies Zusammenspiel des Saug- und Druckventiles und eine gute Abdichtung auch bei den während des Betriebes auftretenden nur geringen Druckdifferenzen. Die Pumpe hat dadurch auch bei geringer Arbeitsgeschwindigkeit gute Vakuumeigenschaften. Durch die vorgesehenen kompletten Ventileinsätze können die Teile dafür unabhängig von dem Pumpenkopf, in den die Ventileinsätze eingesetzt sind, hergestellt werden, was insbesondere bei der Herstellung aus Kunststoff spritztechnisch erhebliche Vorteile bezüglich der Genauigkeit hat. Würde man die Ventilteile direkt in die Pumpenkopf-Platten mit einspritzen, würden sich unvermeidbar erhebliche Maßtoleranzen ergeben. Dies wird bei einer separaten Herstellung der Ventilteile vermieden. Die hohe Präzision der Ventilteile führt unter anderem zu einer spannungsfreien Lagerung der Ventilscheibe, was Voraussetzung ist für ein zuverlässiges Arbeiten der Ventile mit guter Abdichtung auch bei geringen Druckdifferenzen und sehr langsamen Bewegungsabläufen. Außerdem lassen sich die Ventileinsätze insgesamt sehr einfach austauschen.
Die hohe Präzision der Ventile in Verbindung mit den vorgesehenen Ventileinsätzen wirkt sich auch besonders vorteilhaft beim Dosierbetrieb der Pumpe aus, da von der präzisen Arbeitsweise der Ventile auch die Dosiergenauigkeit abhängt.

Vorzugsweise ist die Ausgangslage der Arbeitsmembrane zu Beginn und am Ende einer Dosierung jeweils gleich und vorzugsweise die untere Totpunktlage. Damit ist in Abstimmung an den Arbeitstakt der Dosierpumpe in Ausgangslage jeweils die Ansaugphase beendet, so daß mit dem Start der Pumpe direkt ein Ausschub des Dosiergutes beginnt und somit genau definierte Vorgaben vorhanden sind.
Als Antriebsmotor kann ein gesteuerter oder ein geregelter Motor, insbesondere ein Schrittmotor oder ein in einem Regelkreis arbeitender Synchronmotor oder ein Servo-Gleichstrommotor oder dergleichen vorgesehen sein.
Solche Motoren eignen sich besonders gut für die erfindungsgemäße Dosierpumpe, da sie sich mit ausreichender Genauigkeit positionieren und in ihrer Drehzahl einstellen lassen. Bedarfsweise kann zwischen Motor und Kurbelantrieb der Membrane auch noch ein Untersetzungsgetriebe vorgesehen sein.
Eine Ausgestaltung der Erfindung sieht vor, daß die Widerlagerplatte und die Ventilaufnahmeplatte der Ventile ineinandergreifende Randanformungen aufweisen und in Montagestellung insbesondere miteinander verschweißt, verklebt oder dergleichen verbunden sind.
Dadurch ist eine präzise Zuordnung der Teile bei der Montage vorhanden und durch das Verbinden miteinander, zum Beispiel durch Verkleben, bildet der Ventileinsatz eine einfach handhabbare Einheit.
Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: ein teilweise im Schnitt gehaltenes Motor-Pumpenaggregat,
- Fig. 2: eine Stirnseitenansicht des Motor-Pumpenaggregates mit Blick auf den Pumpenteil,
- Fig. 3: einen Querschnitt eines Ventileinsatzes,
- Fig. 4: eine Innenseitenansicht einer Widerlagerplatte,
- Fig. 5: einen Querschnitt der in Figur 4 gezeigten Widerlagerplatte,
- Fig. 6: einen Querschnitt einer Ventilscheibe,
- Fig. 7: einen Querschnitt einer Ventilaufnahmeplatte und
- Fig. 8: eine Innenseitenansicht der in Figur 7 gezeigten Ventilaufnahmeplatte.

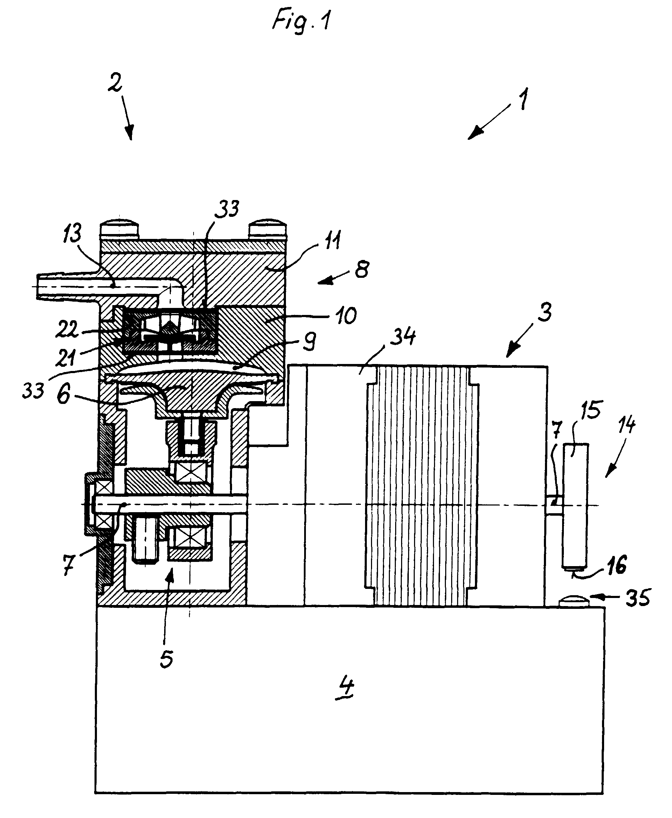

Ein in Figur 1 gezeigtes Motor-Pumpenaggregat ist eine Membran-Dosierpumpe 1, die einen Pumpenteil 2, einen Rotationsantrieb 3, sowie eine Ansteuerelektronik 4 aufweist.
Der im Schnitt dargestellte Pumpenteil 2 läßt einen Kurbelantrieb 5 für eine Arbeitsmembrane 6 erkennen. Der Kurbelantrieb 5 ist mit der Antriebswelle 7 des motorischen Rotationsantriebes 3 verbunden.

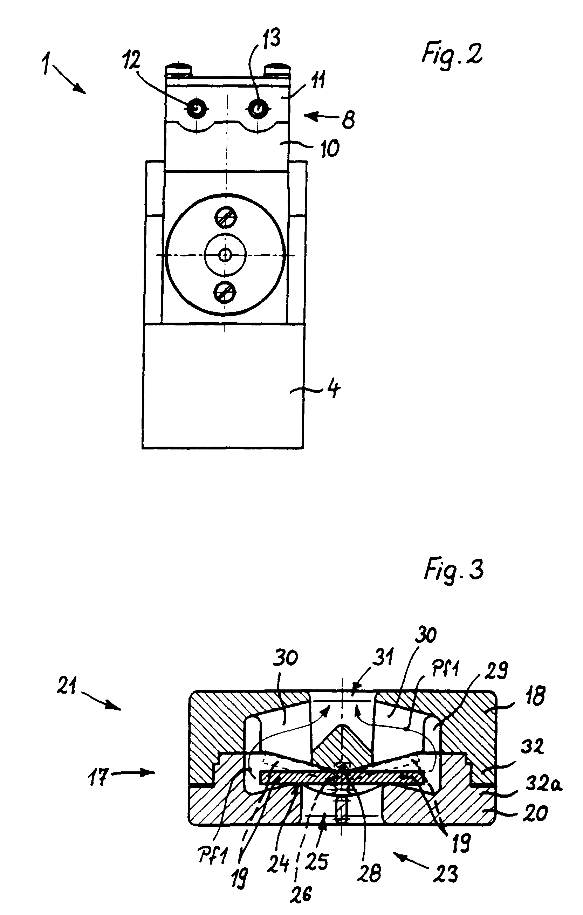

Der Pumpenteil 2 weist einen Pumpenkopf 8 mit einer den Verdichtungraum 9 begrenzenden Abschlußplatte 10 sowie einer Kopfplatte 11 auf. In der Kopfplatte 11 befinden sich zu den Ventilen führende Anschlußkanäle 12 und 13 (Figur 2). Im gezeigten Ausführungsbeispiel bildet der Kanal 12 den Pumpeneinlaß und der Kanal 13 den Pumpenauslaß.

Der motorische Rotationsantrieb 3 ist durch einen mit einer Ansteuerelektronik 4 verbundenen Elektromotor 34 gebildet, wobei hier insbesondere ein Schrittmotor oder in einem Regelkreis arbeitender Synchronmotor oder ein Servo-Gleichstrommotor in Frage kommt.
Bei dem Rotationsantrieb 3 ist vorgesehen, daß dieser nach einem Dosiervorgang jeweils die Arbeitsmembrane in eine vorgebbare bzw. gleiche Ausgangslage bringt. Bevorzugt ist dabei vorgesehen, daß diese Ausgangslage die untere Totpunktlage des Kurbelantriebes 5 ist, wo sich die Arbeitsmembrane 6 in ihrer maximalen Saugstellung befindet. Damit diese definierte Ausgangslage jeweils eingenommen wird, ist an dem Antriebsmotor oder einem von diesem angetriebenen Teil ein Positionsgeber 14 vorgesehen. Bevorzugt ist dies ein optoelektronischer Positionsgeber. Bedarfsweise könnte auch ein anderer Positionsgeber, z.B. ein induktiver oder kapazitiver Positionsgeber vorgegeben sein. Im vorliegenden Ausführungsbeispiel weist der Positionsgeber 14 an einer rückseitigen Verlängerung der Antriebswelle 7 eine Geberscheibe 15 auf, die an einer dem unteren Totpunkt des Kurbelantriebes entsprechenden Stelle eine Markierung 16 hat. Mit Hilfe eines optischen Aufnehmers 35 wird die Lage der Markierung 16 in der unteren Totpunktlage erfaßt und an die Ansteuerelektronik 4 weitergegeben, die dann den Antriebsmotor 34 immer in gleicher Ausgangslage stoppt.
Beispielsweise könnte ein Dosiervorgang über eine einzige Umdrehung des Antriebsmotors 34, bedarfsweise auch über eine größere Anzahl von Umdrehungen ablaufen, wobei aber nach jedem Dosiervorgang die gleiche Ausgangsstellung mit in unterer Totpunktlage befindlicher Arbeitsmembrane 6 eingenommen wird. Die Arbeitsgeschwindigkeit des Rotationsantriebes 3 kann im Bereich von weniger als eine Umdrehung pro Minute bis zu mehreren hundert Umdrehungen pro Minute einstellbar sein. Es sind somit sehr langsame Arbeitshübe möglich. Um auch bei solchen geringen Arbeitsgeschwindigkeiten und den dabei auftretenden geringen Differenzdrücken zwischen Saugseite und Druckseite ein zuverlässiges Dichtverhalten zu erreichen, sind als Einlaß- und Aulaßventil Scheibenventile 17 vorgesehen, von denen eines in Figur 3 im Querschnitt gezeigt ist. Wie gut in Figur 5 bis 7 erkennbar, besteht ein solches Scheibenventil aus drei Teilen, nämlich der in Figur 5 erkennbaren Widerlagerplatte 18, der in Figur 6 erkennbaren Ventilscheibe 19 sowie der in Figur 7 erkennbaren Ventilaufnahmeplatte 20. Aus diesen drei Teilen 18, 19 und 20 ist eine komplette, dosenförmige Einheit als Ventileinsatz 21 gebildet. In der Abschlußplatte 10 des Pumpenkopfes 8 sind für die beiden Ventileinsätze 21 Aufnahmevertiefungen 22 vorgesehen, in die Ventileinsätze 21 eingesetzt und nach dem Aufsetzen der Kopfplatte 11 gehalten sind.
Die Funktionseinheiten bildenden Ventileinsätze 21 lassen sich bedarfsweise ingesamt einfach austauschen. In Figur 1 ist in der Schnittdarstellung das Auslaßventil gezeigt und das daneben liegende Einlaßventil (vgl. auch Figur 2) ist umgekehrt um 180° verdreht in Wendelage in die entsprechende Aufnahmevertiefung 22 eingesetzt. Die Zuordnung der Saugseite und der Druckseite kann beliebig jeweils durch Umdrehen der Ventileinsätze 21 gewählt werden.

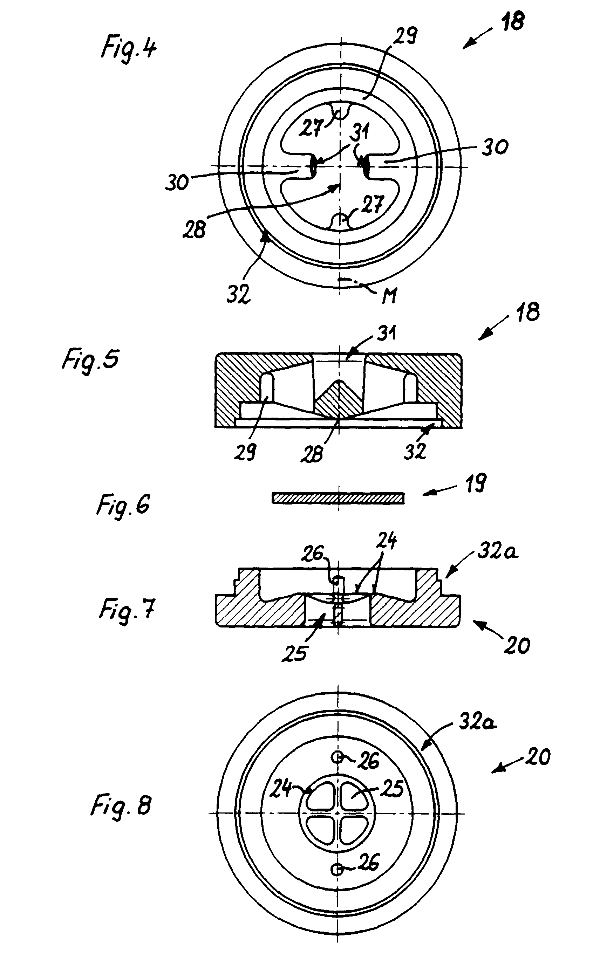

Die für die erfindungsgemäße Membran-Dosierpumpe vorgesehenen Ventile zeichnen sich unter anderem durch eine hohe Schließ- und Öffnungsgeschwindigkeit aus, so daß ein nahezu überschneidungsfreies Zusammenspiel des Saug- und Druckventiles erreicht wird. Außerdem weisen die Ventile ein zuverlässiges Dichtverhalten bereits bei geringsten Druckdifferenzen zwischen der den Verdichtungsraum 9 zugewandten und der dem Verdichtungsraum 9 abgewandten Seite auf. Somit ist ein zuverlässiger Pump- bzw. Dosiervorgang selbst bei geringsten Hubfrequenzen gewährleistet.
Wie gut in Figur 3 erkennbar, liegt bei einem saugseitig angeordnetem Ventil die Ventilscheibe 19 mit ihrer der Saugseite 23 zugewandten Flachseite in Schließstellung auf dem einen Ventilsitz bildenden Öffnungsrand 24 eines zentralen Zuströmkanales 25 in der Ventilaufnahmeplatte 20 auf. Gegen seitliches Verschieben ist die Ventilscheibe 19 durch Positionierzapfen 26 gehalten, die seitlich neben dem Öffnungsrand angeordnet sind und in randoffene Aussparungen der Ventilscheibe 19 eingreifen. Die Positionierzapfen 26 sind gut in Figur 7 und 8 erkennbar. Sie durchgreifen in Montagestellung die Ventilscheibe 19 und greifen in Gegenausnehmungen 27 in der Widerlagerplatte 18 ein (vgl. Figur 4). Diese Positionierzapfen 26 an der Ventilaufnahmeplatte 20 und die Gegenausnehmungen 27 in der Widerlagerplatte 18 bilden auch eine Positionierhilfe beim Zusammensetzen dieser beiden Platten in der vorgesehenen Montagestellung.
Bei dem auf der Druckseite der Pumpe um 180° gedreht angeordneten Ventil sind entsprechend Druckseite und Saugseite des Ventiles vertauscht.
Die Widerlagerplatte 18 weist innerhalb der Projektionsverlängerung des Zuströmkanales der Ventilaufnahmeplatte 20 ein stegartiges Widerlager 28 auf, über das die Ventilscheibe 19 in Öffnungsstellung etwa entlang einer Durchmesserlinie abgestützt wird. In Öffnungsstellung des Ventiles sind die beidseitig der mittleren Stützlinie befindlichen Ventilscheibenlappen zu der Widerlagerplatte 18 hin verschwenkt, so daß der Zuströmkanal 25 geöffnet ist. Diese Öffnungsstellung ist in Figur 3 strichliniert angedeutet.
Der Abstand der durch die Stützstelle des Widerlagers 28 laufende Ebene von der von dem Öffnungsrand 24 gebildeten Parallelebene ist so bemessen, daß die Ventilscheibe 19 dazwischen spannungsfrei gehalten ist. Der Abstand entspricht somit der Dicke der Ventilscheibe 19. Die spannungsfreie Lagerung der Ventilscheibe 19 ist die Voraussetzung für ein Ansprechen der Ventilscheibe bereits bei geringsten Druckdifferenzen und auch für einen schnellen Schließ- und Öffnungsvorgang.
In Figur 4 und 5 ist erkennbar, daß das Widerlager der Widerlagerplatte 18 beidseitig der durch die Mittelinie M gebildeten Widerlager-Scheitellinie gekrümmt verläuft und an die Biegeform der Ventilscheibe 19 in Öffnungsstellung (vgl. in Figur 3 die strichlinierte Ventilscheibe 19) angepaßt ist. Die Ventilscheibe 19 ist somit in Öffnungsstellung weitgehend flächig abgestützt. Der Durchmesser der gekrümmten Abstützfläche entspricht etwa dem Durchmesser der Ventilscheibe 19. Um diesen Bereich herum ist ein Ringraum 29 gebildet, der über gegenüberliegende Seitenschlitze 30 in dem Widerlager mit dem Abströmkanal 31 in der Widerlagerplatte 18 verbunden ist. In Öffnungsstellung kann somit das Fördermedium über den Zuströmkanal 25 an der in Offenstellung befindlichen Ventilscheibe 19 seitlich nach außen vorbei in den Ringraum 29 und von diesem über die Seitenschlitze 30 in den Abströmkanal 31 gelangen, so wie dies durch die Pfeile Pf1 in Figur 3 angedeutet ist.

Die Widerlagerplatte 18 und die Ventilaufnahmeplatte 20, die praktisch Ventileinsatz-Gehäuseteile bilden, weisen Randanformungen 32, 32 a auf, die komplementär profiliert sind, so daß sie in Montagestellung ineinandergreifen (Figur 3). Die Randanformungen können so ausgebildet sein, daß sich beim Zusammenfügen der Widerlagerplatte 18 und der Ventilaufnahmeplatte 20 ein dichtender und haltender Presssitz ergibt. Bedarfsweise können die beiden Teile auch noch miteinander verschweißt oder verklebt sein.

Bei den in die Aufnahmevertiefungen 22 der Abschlußplatte 10 eingesetzten Ventileinsätze 21 können stirnseitig angeordnete Dichtscheiben 33 (Figur 1) vorgesehen sein, die zentrale Durchgangsöffnungen haben oder aber die Ventileinsätze 21 können selbst so ausgebildet sein, daß sich stirnseitig eine ausreichende Abdichtung ergibt.
Wie gut in Figur 1 erkennbar, bildet das Motor-Pumpenaggregat zusammen mit der Ansteuerelektronik 4 eine kompakte Baueinheit.

## Patentansprüche

1. Membran-Dosierpumpe mit einem motorischen Rotationsantrieb für die Arbeitsmembrane und einem Pumpenkopf mit einem Einlaßventil und einem Auslaßventil, **dadurch gekennzeichnet,** daß der motorische Rotationsantrieb (3) mit einer Ansteuerelektronik (4) elektrisch verbunden ist, daß diese und der Motor für einen Betrieb mit jeweils vorgebbarer Ausgangslage der angetriebenen Arbeitsmembrane (6) zu Beginn und am Ende einer Dosierung ausgebildet sind, daß die Ein- und Auslaßventile mit elastischen Ventilscheiben (19) ausgebildet sind, die in Schließstellung mit einer Flachseite auf dem einen Ventilsitz bildenden Öffnungsrand (24) eines Zuströmkanales (25) aufliegen, daß auf der dem Zuströmkanal abgewandten Seite der Ventilscheibe innerhalb der Projektionsverlängerung des Zuströmkanales ein zumindest in Ventil-Öffnungsstellung die Ventilscheibe (19) abstützendes, stegartiges Widerlager (28) vorgesehen ist und daß die Ventile jeweils komplette, auswechselbare Einheiten bilden und als Ventileinsätze (21) mit einer das Widerlager (28) und einen Abströmkanal (31) aufweisenden Widerlagerplatte (18), einer Ventilaufnahmeplatte (20) sowie der Ventilscheibe (19) ausgebildet sind.

2. Pumpe nach Anspruch 1, dadurch gekennzeichnet, daß die Ausgangslage der Arbeitsmembrane (6) zu Beginn und am Ende einer Dosierung jeweils gleich ist und vorzugsweise die untere Totpunktlage ist.

3. Pumpe nach Anspruch 1 oder 2, dadurch gekennzeichnet, daß die Anzahl der Arbeitshübe der Arbeitsmembrane (6) und/oder die Antriebsgeschwindigkeit verstellbar sind.

4. Pumpe nach einem der Ansprüche 1 bis 3, dadurch gekennzeichnet, daß die Drehzahl des Antriebsmotors (34) beziehungsweise die Hubzahl der Arbeitsmembrane (6) in einem Bereich von weniger als eine Umdrehung (Hub) pro Minute bis zu mehreren hundert Umdrehungen (Hüben) pro Minute einstellbar ist, vorzugsweise in einem Bereich von 0,5 Umdrehungen (Hüben) pro Minute bis zu 300 Umdrehungen (Hüben) pro Minute.

5. Pumpe nach einem der Ansprüche 1 bis 4, dadurch gekennzeichnet, daß als Antriebsmotor (34) ein gesteuerter oder ein geregelter Motor, insbesondere ein Schrittmotor oder ein in einem Regelkreis arbeitender Synchronmotor oder ein Servo-Gleichstrommotor oder dergleichen vorgesehen ist.

6. Pumpe nach einem der Ansprüche 1 bis 5, dadurch gekennzeichnet, daß an dem Antriebsmotor (34) oder einem von diesem angetriebenen Teil ein Positionsgeber (14), vorzugsweise ein berührungsloser, beispielsweise optoelektronischer Positionsgeber vorgesehen ist, der mit der Ansteuerelektronik (4) verbunden ist.

7. Pumpe nach einem der Ansprüche 1 bis 6, dadurch gekennzeichnet, daß bei den Ein- und Auslaßventilen das Widerlager (28) für die Ventilscheibe (19) beidseitig einer Widerlager-Scheitellinie gekrümmt verläuft und an die Biegeform der Ventilscheibe (19) in Öffnungsstellung angepaßt ist.

8. Pumpe nach einem der Ansprüche 1 bis 7, dadurch gekennzeichnet, daß die Widerlagerplatte (18) und die Ventilaufnahmeplatte (20) der Ventile ineinandergreifende Randanformungen (32,32a) aufweisen und in Montagestellung insbesondere miteinander verschweißt, verklebt oder dergleichen verbunden sind.

9. Pumpe nach einem der Ansprüche 1 bis 8, dadurch gekennzeichnet, daß die Ventilaufnahmeplatte randseitig bei der Ventilscheibe eingreifende Positionierzapfen aufweist und daß die Widerlagerplatte an den Enden der Widerlager-Scheitellinie Ausnehmungen zum Eingreifen der Positionierzapfen hat.

10. Pumpe nach einem der Ansprüche 1 bis 9, dadurch gekennzeichnet, daß in dem Pumpenkopf Aufnahmevertiefungen (22) zum Einsetzen der Ventileinsätze (21) vorgesehen sind.

11. Pumpe nach einem der Ansprüche 1 bis 10, dadurch gekennzeichnet, daß der Pumpenkopf (8) eine die Aufnahmevertiefungen (22) für die Ventileinsätze (21) abdeckende und haltende, zu den Ventilen führende Anschlußkanäle aufweisende Kopfplatte (11) hat.

12. Pumpe nach einem der Ansprüche 1 bis 11, dadurch gekennzeichnet, daß das Antriebs-Pumpenaggregat zusammen mit der Ansteuerelektronik eine kompakte Funktionseinheit bildet.

## Claims

1. Diaphragm metering pump with a motorised rotary drive for the working diaphragm and a pump head with an inlet valve and an outlet valve, characterised in that the motorised rotary drive (3) is electrically connected to electronic control means (4), in that the control means and the motor are constructed to operate with the driven working diaphragm (6) in a pre-set starting position at the start and finish of a metering operation, in that the inlet and outlet valves are constructed with flexible valve discs (19) which, in the closed position, rest with one flat side on the opening edge (24) of an inflow channel (25) forming a valve seat, in that on the side of the valve disc remote from the inflow channel, inside the projected extension of the inflow channel, there is a web-like abutment (28) which supports the valve disc (19) at least in the open position of the valve, and in that the valves each form self-contained, replaceable units and are constructed as valve inserts (21) with an abutment plate (18) comprising the abutment (28) and an outflow channel (31), a valve receiving plate (20) and the valve disc (19).

2. Pump according to claim 1, characterised in that the starting position of the working diaphragm (6) is the same at the start and finish of a metering operation and is preferably the bottom dead centre position.

3. Pump according to claim 1 or 2, characterised in that the number of working strokes of the working diaphragm (6) and/or the speed of operation is or are adjustable.

4. Pump according to one of claims 1 to 3, characterised in that the speed of the drive motor (34) or the number of strokes of the working diaphragm (6) is adjustable within a range from less than one revolution (stroke) per minute up to a plurality of hundred revolutions (strokes) per minute, preferably in a range from 0.5 revolutions (strokes) per minute up to 300 revolutions (strokes) per minute.

5. Pump according to one of claims 1 to 4, characterised in that the drive motor (34) is a controlled or regulated motor, particularly a stepping motor or a synchronous motor operating in a regulating circuit or a direct current servomotor or the like.

6. Pump according to one of claims 1 to 5, characterised in that a position indicator (14), preferably a contactless, e.g. optoelectronic, position indicator is provided on the drive motor (34) or on a part driven by the latter and is connected to the electronic control means (4).

7. Pump according to one of claims 1 to 6, characterised in that in the inlet and outlet valves the abutment (28) for the valve disc (19) is curved in shape on both sides of a zenithal line of the abutment and is matched to the curved shape of the valve disc (19) in the open position.

8. Pump according to one of claims 1 to 7, characterised in that the abutment plate (18) and the valve receiving plate (20) of the valves have shaped edges (32, 32a) engaging in one another and in the assembled position are, in particular, welded to oneanother, adhesively bonded or similarly attached.

9. Pump according to one of claims 1 to 8, characterised in that the valve receiving plate has positioning pins which engage at the edges of the valve disc and in that the abutment plate has recesses for the engagement of the positioning pins at the ends of the zenithal line of the abutment.

10. Pump according to one of claims 1 to 9, characterised in that accommodation recesses (22) for the insertion of the valve inserts (21) are provided in the pump head.

11. Pump according to one of claims 1 to 10, characterised in that the pump head (8) has a head plate (11) which covers and retains the accommodation recesses (22) for the valve inserts (21) and which comprises connecting channels leading to the valves.

12. Pump according to one of claims 1 to 11, characterised in that the pump drive assembly forms a compact functional unit together with the electronic control means.

## Revendications

1. Pompe de dosage à membrane, avec un entraînement motorisé en rotation pour la membrane de travail et avec une tête de pompe pourvue d'une soupape d'admission et d'une soupape d'échappement, **caractérisée** en ce que l'entraînement motorisé en rotation (3) est relié électriquement à un bloc électronique d'asservissement (4), en ce que ce bloc et le moteur sont conçus pour un fonctionnement avec une position de repos respective prédéterminable de la membrane de travail entraînée (6) au début et à la fin d'un dosage, en ce que les soupapes d'admission et d'échappement sont réalisées sous la forme de disques de soupape élastiques (19) qui, en position fermée, reposent par un côté plat sur un bord d'ouverture (24) d'un canal d'alimentation (25) qui constitue un siège de soupape, en ce qu'il est prévu, sur le côté du disque de soupape qui est opposé au canal d'alimentation, dans le prolongement de la projection du canal d'alimentation, un contre-appui (28) du genre nervure qui soutient le disque de soupape (19) au moins dans la position ouverte de la soupape, et en ce que les soupapes constituent des unités respectives complètes, remplaçables, et sont réalisées sous la forme d'inserts de soupape (21) avec une plaque de contre-appui (18) pourvue du contre-appui (28) et d'un canal d'évacuation (31), une plaque réceptrice de soupape (20) et le disque de soupape (19).

2. Pompe selon la revendication 1, **caractérisée** en ce que la position de repos de la membrane de travail (6) est identique au début et à la fin d'un dosage, et est de préférence la position de point mort bas.

3. Pompe selon la revendication 1 ou 2, **caractérisée** en ce que le nombre de cycles de travail de la membrane de travail (6) et/ou la vitesse d'entraînement sont réglables.

4. Pompe selon une des revendications 1 à 3, **caractérisée** en ce que la vitesse de rotation du moteur d'entraînement (34) ou encore le nombre de cycles de la membrane de travail (6) est réglable dans une plage allant de moins d'une révolution (cycle) par minute à plusieurs centaines de révolutions (cycles) par minute, de préférence dans une plage allant de 0,5 révolution (cycle) par minute à 300 révolutions (cycles) par minute.

5. Pompe selon une des revendications 1 à 4, **caractérisée** en ce qu'il est prévu, comme moteur d'entraînement (34), un moteur asservi ou régulé, notamment un moteur pas à pas ou un moteur synchrone travaillant dans un circuit de régulation, ou un servomoteur à courant continu ou analogue.

6. Pompe selon une des revendications 1 à 5, **caractérisée** en ce qu'il est prévu, sur le moteur d'entraînement (34) ou sur un élément entraîné par ce dernier, un transmetteur de position (14), de préférence un transmetteur de position sans contact, par exemple optoélectronique, qui est relié au bloc électronique d'asservissement (4).

7. Pompe selon une des revendications 1 à 6, **caractérisée** en ce que pour les soupapes d'admission et d'échappement, le contre-appui (28) pour le disque de soupape (19) s'étend en courbe de part et d'autre d'une ligne de sommet de contre-appui, et est adapté à la forme courbe du disque de soupape (19) en position ouverte.

8. Pompe selon une des revendications 1 à 7, **caractérisée** en ce que la plaque de contre-appui (18) et la plaque réceptrice de soupape (20) des soupapes présentent des formations de bords (32, 32a) en engagement mutuel et sont assemblées l'une à l'autre en position de montage, notamment par soudage, collage ou analogue.

9. Pompe selon une des revendications 1 à 8, **caractérisée** en ce que la plaque réceptrice de soupape présente des tenons de positionnement qui s'engagent prés du bord du disque de soupape, et en ce que la plaque de contre-appui possède, aux extrémités de la ligne de sommet de contre-appui, des évidements pour l'engagement des tenons de positionnement.

10. Pompe selon une des revendications 1 à 9, **caractérisée** en ce que des renfoncements récepteurs (22) sont prévus dans la tête de pompe pour l'insertion des inserts de soupape (21).

11. Pompe selon une des revendications 1 à 10, **caractérisée** en ce que la tête de pompe (8) possède une plaque de tête (11), qui recouvre et maintient les renfoncements récepteurs (22) pour les inserts de soupape (21) et qui présente des canaux de raccordement menant aux soupapes.

12. Pompe selon une des revendications 1 à 11, **caractérisée** en ce que le groupe entraînement-pompe constitue conjointement avec le bloc électronique d'asservissement une unité fonctionnelle compacte.
